# EUROPEAN PATENT APPLICATION

(11) **EP 4 644 749 A1**
(43) Date of publication of application: **05.11.2025**
(21) Application number: 23911978.7
(22) Date of filing: 22.12.2023
(51) Int. Cl.: F16L 1/00, B61B 13/10

(54) **PIPE TRANSPORT DEVICE AND PIPING METHOD**

(30) Priority: 27.12.2022 JP 2022210885
(71) Applicant: Kubota Corporation, Osaka 556-8601 (JP)
(72) Inventor: KOMARU Yuito, Amagasaki-shi, Hyogo 660-0095 (JP); ODA Keita, Amagasaki-shi, Hyogo 660-0095 (JP)
(74) Representative: Müller-Boré & Partner Patentanwälte PartG mbB
(86) International application number: PCT/JP2023/046135
(87) International publication number: WO 2024/143198

(57) **Abstract**

A pipe transport device capable of efficiently transporting a flexible pipe member in a stable posture in a pipeline is provided. A pipe transport device 1 is a device that transports a pipe member to be installed in an existing pipeline. The pipe transport device 1 includes: a pipe support member 11 that is a rod-shaped member and penetrates the flexible pipe member to support the pipe member; and pipe transfer members 12A and 12B detachably supporting the pipe support member 11 and capable of transferring the supported pipe support member 11. The pipe transfer members 12A and 12B transfer, in the existing pipeline, the pipe member 50 supported by the pipe support member 11 along an axial direction of the pipeline, in a state where the pipe transfer members 12A and 12B support the pipe support member 11.

## Description

### TECHNICAL FIELD

The present teaching relates to, for example, a pipe transport device that transports a pipe member to be installed in an existing pipeline, and a piping method for installing the pipe member in the existing pipeline.

### BACKGROUND ART

As a trenchless renewal method for aging existing pipelines, a pipe-in-pipe method (hereinafter referred to as a "PIP method"), for example, is known. The PIP method is a method in which shafts are constructed at each of one end and the other end of an existing pipeline, and new pipes are transported from the constructed shafts into the existing pipeline and joined together within the existing pipeline.

The PIP method enables efficient and economical piping construction in that the PIP method does not require a space for pipe-joining work within the existing pipeline. Various proposals have been made concerning such a PIP method.

For example, Patent Document 1 discloses a technique of renewing a pipeline using a bellows pipe having elastic flexibility in a PIP method. More specifically, Patent Document 1 discloses the use of a connecting pipe in which a plurality of flexible bellows pipes are sequentially connected in the PIP method. The connecting pipe is carried into the worksite in a state where the connecting pipe has been wound up on a winding device located at the start end beforehand. A wire is attached to one end of the connecting pipe. The wire is coupled to a winding device at a terminal end through an existing pipeline located between shafts at two locations. By winding the wire with the winding device located at the terminal end, the connecting pipe is placed in the existing pipeline.

### CITATION LIST

### PATENT DOCUMENTS

Patent Document 1: Japanese Patent Application Publication No. 2019-011775

### SUMMARY OF INVENTION

### TECHNICAL PROBLEM

In the PIP method of Patent Document 1, the connecting pipe constituted by the flexible bellows pipes is pulled by the wire. Therefore, there is a possibility that the connecting pipe may come into contact with the inner wall of the existing pipeline or the like while being fed from the winding device located at the start end until the connecting pipe is disposed inside the existing pipeline. In this manner, when the connecting pipe comes into contact with the inner wall of the existing pipeline or the like, an unexpected force is applied to the connecting pipe, and the connecting pipe might be deformed.

Furthermore, it is difficult to convey the connecting pipe by pulling the connecting pipe with the wire while preventing contact with the inner wall or the like within the existing pipeline. A technique is required to transfer flexible pipe members to the piping place in a stable posture. Moreover, since efficiency is required in the construction of the pipeline, it is desirable to transfer the pipe members efficiently.

It is therefore an object of the present teaching to provide a pipe transport device capable of efficiently transferring a flexible pipe member in a stable posture within a pipeline.

### SOLUTION TO PROBLEM

A pipe transport device according to one embodiment of the present teaching is a deice that transports a pipe member to be installed in an existing pipeline. The pipe transport device includes: a pipe support member that is a rod-shaped member and penetrates the pipe member to support the pipe member, the pipe member having flexibility; and a pipe transfer member detachably supporting the pipe support member and capable of transferring the supported pipe support member. The pipe transfer member transfers the pipe member supported by the pipe support member along an axial direction of the pipeline in the existing pipeline, in a state where the pipe transfer member supports the pipe support member. (first configuration)

In the configuration described above, the pipe transfer member detachably supports the pipe support member. Thus, in the state where the pipe support member is detached from the pipe transfer member, the pipe support member can be inserted into the pipe member. In addition, in the state where the pipe support member penetrates and supports the pipe member, the pipe transfer member can support the pipe support member. In this manner, the flexible pipe member is supported by the pipe support member in the state where the pipe support member penetrates the pipe member. Accordingly, the posture of the pipe member during transfer can be stabilized. This can prevent contact of the pipe member with the existing pipeline during transfer.

Further, since the pipe support member penetrates the pipe member, after the pipe member is transported to a predetermined position in the existing pipeline, the pipe support member is detached from the pipe transfer member, and in this state, the pipe support member can be easily pulled out from the pipe member.

As described above, in this configuration, since the flexible pipe member is supported by the pipe support member in the state where the pipe support member penetrates the pipe member, the posture of the pipe member during transfer can be stabilized. In addition, in the above configuration, the pipe support member can be easily pulled out from the pipe member in the state where the pipe support member is detached from the pipe transfer member. Thus, high workability is obtained in pulling out the pipe support member from the pipe member.

In the manner described above, the flexible pipe member can be efficiently transferred in a stable posture in the pipeline.

In the first configuration, the pipe support member includes a rod-shaped portion extending in one direction, and a projection portion that projects a direction intersecting with the one direction with respect to the rod-shaped portion, and supports a coupling part of the pipe member, the pipe member including a plurality of displacement portions and the coupling part coupling the displacement portions to each other. (second configuration)

In this configuration, the projection portion of the pipe support member penetrating the pipe member supports the coupling part of the pipe member. Accordingly, the pipe support member can support the coupling part that is not likely to be displaced by the projection portion while avoiding the displacement portion that is likely to be displaced in the pipe member. As a result, deformation of the pipe member can be suppressed during transfer by the pipe support member.

In the second configuration, a position of the projection portion in the one direction is adjustable relative to the rod-shaped portion. (third configuration)

In this configuration, the position of the projection portion relative to the rod-shaped portion in the pipe support member can be adjusted in accordance with the position of the coupling part of the pipe member. As a result, versatility of the pipe transport device can be enhanced.

A piping method according to one embodiment of the present teaching is a method for installing a pipe member in an existing pipeline.

The piping method includes: a pipe support member insertion step of inserting a pipe support member into the pipe member having flexibility; a pipe support member support step of supporting the pipe support member with a pipe transfer member; and a pipe member transfer step of transferring by the pipe transfer member, in the existing pipeline, the pipe member supported by the pipe support member along an axial direction of the pipeline. (fourth configuration)

In this configuration, the pipe support member can be transferred by the pipe transfer member in the state where the pipe support member penetrates and supports the pipe member. Accordingly, the posture of the pipe member during transfer can be stabilized. This can prevent contact of the pipe member with the existing pipeline during transfer.

Further, since the pipe support member penetrates the pipe member, after the pipe member is transported to a predetermined position in the existing pipeline, the pipe support member is detached from the pipe transfer member, and in this state, the pipe support member can be easily pulled out from the pipe member.

In the manner described above, in the configuration described above, the flexible pipe member is supported by the pipe support member in the state of being penetrated by the pipe support member. Accordingly, the posture of the pipe member during transfer can be stabilized. In addition, in the above configuration, the pipe support member can be easily pulled out from the pipe member in the state where the pipe support member is detached from the pipe transfer member. As a result, high workability is obtained.

In the manner described above, the flexible pipe member can be efficiently transferred in a stable posture in the pipeline.

In the fourth configuration, the piping method further includes: after the pipe member transfer step, in a state where the pipe support member is detached from the pipe transfer member, a pipe support member pull-out step of pulling out the pipe support member from the pipe member; and a pipeline including a first straight pipe portion having an opening at one end, a bent pipe portion having one end connected to another end of the first straight pipe portion, and a second straight pipe portion having one end connected to another end of the bent pipe portion, a moving step of pulling the pipe member from the second straight pipe portion of the pipeline to move the pipe member to the another end of the bent pipe portion while bending the pipe member along a curve of the bent pipe portion. (fifth configuration)

In this configuration, in the pipeline including the bent pipe portion, the pipe member is pulled from the second straight pipe portion of the pipeline so that the pipe member is moved to the another end of the bent pipe portion while bending along the curve of the bent pipe portion. Accordingly, the flexible pipe member can be bent and piped in the bent pipe portion. Accordingly, the pipe member can be disposed not only in the straight pipe portion, but also in the bent pipe portion in a bent state. Thus, the piping method enabling piping the pipe member in various existing pipelines can be obtained. In addition, a pipeline including the bent pipe portion, which has been difficult to renew unless a shaft is constructed, can be easily renewed. That is, in the configuration described above, construction can be performed even on the bent pipe portion where a shaft cannot be constructed due to conditions such as traffic conditions.

In the fifth configuration, the moving step includes a support ring setting step of setting a support ring in the second straight pipe portion, a winding device disposing step of disposing a winding device in the support ring, a coupling step of coupling the pipe member and the winding device to each other by a wire, and a pulling step of pulling the pipe member toward the support ring by winding the wire by the winding device. (sixth configuration)

In this configuration, the use of the support ring can obtain a reaction force in the pipeline. This eliminates the necessity for supplying a force of pulling the pipe member from the outside of the shaft. Accordingly, in the moving step, the pipe member can be more efficiently moved to the bent pipe portion.

In the fifth or sixth configuration, in the pipe support member pull-out step, a pipe lifting jig is set in the first straight pipe portion and lifts the pipe support member relative to the pipe transfer member so that the pipe support member is separated from the pipe transfer member and the pipe support member is pulled out from the pipe member. (seventh configuration)

In this configuration, while the pipe support member is lifted relative to the pipe transfer member by using the pipe lifting jig, the pull-out work of the pipe support member from the pipe member can be performed. After the pipe support member is pulled out from the pipe member, the pipe member can be lowered by the pipe lifting jig. In this manner, the pipe lifting jig can be used to efficiently perform the pull-out work of the pipe support member and the disposing work of the pipe member. Accordingly, the pull-out work of the pipe support member can be more efficiently performed.

In the seventh configuration, in the pipe support member pull-out step, in the state where the pipe support member is separated from the pipe transfer member, the pipe transfer member is retracted relative to the pipe member. (eighth configuration)

In this configuration, the retracted pipe transfer member can be collected. Thus, the collected pipe transfer member can be reused.

In the eighth configuration, the piping method further includes a caster member attachment step of attaching, to an outer surface of the pipe member, a caster member capable of moving the pipe member in the existing pipeline, before the moving step. (ninth configuration)

In this configuration, by attaching the caster member to the outer surface of the pipe member, the pipe member can be easily moved in the existing pipeline. Thus, in the moving step after the pipe transfer member is retracted, a force of pushing the pipe member into the bent pipe portion can be reduced.

### ADVANTAGEOUS EFFECTS OF INVENTION

A pipe transport device according to one embodiment of the present teaching includes: a pipe support member that is a rod-shaped member and penetrates a pipe member to support the pipe member, the pipe member having flexibility; and a pipe transfer member detachably supporting the pipe support member and capable of transferring the supported pipe support member. The pipe transfer member transfers, in the existing pipeline, the pipe member supported by the pipe support member along an axial direction of the pipeline, in a state where the pipe support member supports the pipe transfer member.

Accordingly, the flexible pipe member is supported by the pipe support member while being penetrated by the pipe support member. At a transfer position of the pipe member, the pipe support member can be easily pulled out from the pipe member. Thus, the flexible pipe member can be efficiently transported in a stable posture within the pipeline.

### BRIEF DESCRIPTION OF DRAWINGS

[FIG. 1] FIG. 1 is a side view illustrating a schematic configuration of a pipe transport device according to a first embodiment.
[FIG. 2] FIG. 2 is an enlarged side view illustrating a schematic configuration of a pipe transfer member of the pipe transport device.
[FIG. 3] FIG. 3 is an enlarged front view illustrating a schematic configuration of the pipe transfer member of the pipe transport device.
[FIG. 4] FIG. 4 is a flowchart showing process steps of a piping method according to the first embodiment.
[FIG. 5] FIG. 5 is a view for describing an operation of attaching a pipe member suspended by a wire rope to the pipe transfer members.
[FIG. 6] FIG. 6 is a view for describing a state where a pipe support member is supported by the pipe transfer members.
[FIG. 7] FIG. 7 is a side view illustrating a schematic configuration of a pipe transport device according to a second embodiment.
[FIG. 8] FIG. 8 is a side view illustrating a schematic configuration of a pipe member according to the second embodiment.
[FIG. 9A] FIG. 9A is a view schematically illustrating a pipe member transfer step of a piping method according to the second embodiment.
[FIG. 9B] FIG. 9B is a view schematically illustrating a support ring setting step, a winding device disposing step, and a coupling step of the piping method according to the second embodiment.
[FIG. 9C] FIG. 9C is a view schematically illustrating a pulling step of the piping method according to the second embodiment.
[FIG. 9D] FIG. 9D is a view schematically illustrating a piping step for a coupling collar and a straight pipe of the piping method according to the second embodiment.
[FIG. 10] FIG. 10 is a flowchart showing process steps of the piping method according to the second embodiment.
[FIG. 11] FIG. 11 is a view for describing an operation of attaching a pipe member suspended by wire ropes to pipe transfer members.
[FIG. 12] FIG. 12 is a view illustrating the pipe member in FIG. 11 in a vertical cross section.
[FIG. 13] FIG. 13 is a view for describing a state where the pipe support member is supported by the pipe transfer members.
[FIG. 14A] FIG. 14A is a view illustrating a part of the pipe member transfer step.
[FIG. 14B] FIG. 14B is an enlarged cross-sectional view taken along line XIVB-XIVB in FIG. 14A.
[FIG. 15A] FIG. 15A is a view illustrating another part of the pipe member transfer step.
[FIG. 15B] FIG. 15B is an enlarged cross-sectional view taken along line XVB-XVB in FIG. 15A.
[FIG. 16A] FIG. 16A is a view for describing a setting operation of pipe lifting jigs in a pipe support member pull-out step.
[FIG. 16B] FIG. 16B is an enlarged cross-sectional view taken along line XVIB-XVIB in FIG. 16A.
[FIG. 17A] FIG. 17A is a view for describing a pipe lifting operation in the pipe support member pull-out step.
[FIG. 17B] FIG. 17B is an enlarged cross-sectional view taken along line XVIIB-XVIIB in FIG. 17A.
[FIG. 18A] FIG. 18A is a view for describing a pull-out operation of transfer members in the pipe support member pull-out step.
[FIG. 18B] FIG. 18B is an enlarged cross-sectional view taken along line XVIIIB-XVIIIB in FIG. 18A.
[FIG. 19A] FIG. 19A is a view for describing a mount operation of a pipe member in the pipe support member pull-out step.
[FIG. 19B] FIG. 19B is an enlarged cross-sectional view taken along line XIXB-XIXB in FIG. 19A.
[FIG. 20A] FIG. 20A is a view for describing a pull-out operation in the pipe support member pull-out step.
[FIG. 20B] FIG. 20B is an enlarged cross-sectional view taken along line XXB-XXB in FIG. 20A.
[FIG. 21A] FIG. 21A is a piping diagram for describing a moving step.
[FIG. 21B] FIG. 21B is an enlarged cross-sectional view taken along line XXIB-XXIB in FIG. 21A.
[FIG. 22] FIG. 22 is a piping diagram illustrating a state after pulling of the pipe member.
[FIG. 23A] FIG. 23A is a piping diagram illustrating a state at setting of lifting jigs.
[FIG. 23B] FIG. 23B is an enlarged cross-sectional view taken along line XXIIIB-XXIIIB in FIG. 23A.
[FIG. 23C] FIG. 23C is a view corresponding to FIG. 23B and illustrating a state at setting of a crosstie.

### DESCRIPTION OF EMBODIMENT

Embodiments will be described hereinafter with reference to the drawings. In the drawings, the same or corresponding parts are denoted by the same reference characters, and description thereof will not be repeated. The dimensions of components in the drawings do not strictly represent actual dimensions of the components and dimensional proportions of the components.

Hereinafter, arrow UP in the drawings represents an upward direction of a pipe transport device 1. Arrow DW in the drawings represents a downward direction of the pipe transport device 1. Arrow FR in the drawings represents a forward direction of the pipe transport device 1. Arrow RR in the drawings represents a rearward direction of the pipe transport device 1.

Hereinafter, arrow PUP in the drawings represents an upward direction of an existing pipeline PL. Arrow PDW in the drawings represents a downward direction of the existing pipeline PL.

Hereinafter, arrow DUP in the drawings represents an upward direction of pipe transfer members 12A and 12B. Arrow DDW in the drawings represents a downward direction of the pipe transfer members 12A and 12B. Arrow DFR in the drawings represents a forward direction of the pipe transfer members 12A and 12B. Arrow DRR in the drawings represents a rearward direction of the pipe transfer members 12A and 12B. Arrow DRG in the drawings represents a rightward direction of the pipe transfer members 12A and 12B. Arrow DLF in the drawings represents a leftward direction of the pipe transfer members 12A and 12B.

In the following description, the term "same" includes not only a case where values or components are strictly the identical but also a case where values or components are in a range that can be regarded as substantially the same. Therefore, the same degree is acceptable as long as the effect of the invention is achieved.

In the following description, expressions such as "fixed," "connected," and "attached" include not only a case where members are directly fixed or the like but also a case where the members are fixed or the like through other members. That is, in the following description, the expression such as "fixed or the like" includes meanings of direct and indirect fixing or the like between members.

### [First Embodiment]

### (Pipe Transport Device)

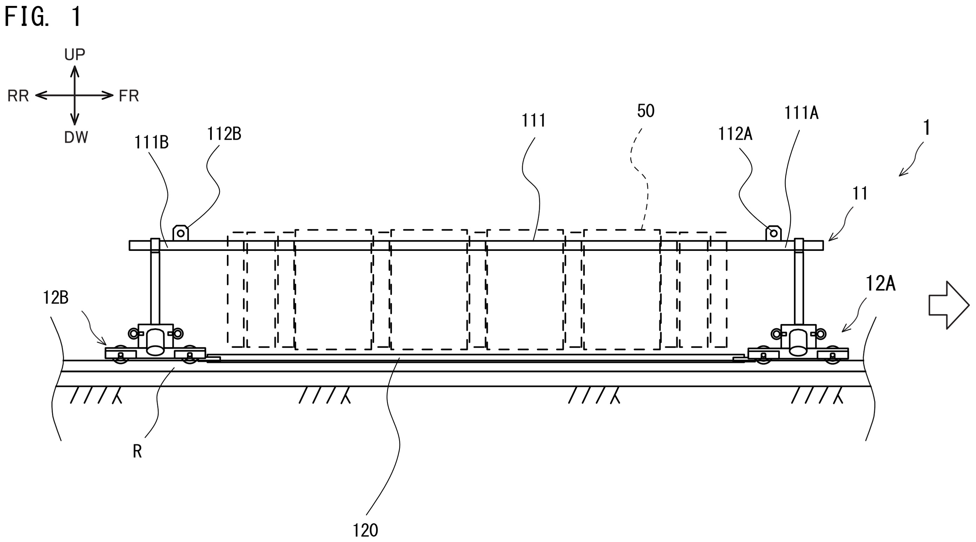

FIG. 1 is a side view illustrating a schematic configuration of a pipe transport device 1 according to a first embodiment. As illustrated in FIG. 1, the pipe transport device 1 transports a pipe member 50 to be installed in an existing pipeline. The pipe transport device 1 includes a pipe support member 11 and pipe transfer members 12A and 12B.

The pipe support member 11 is a rod-shaped member extending in one direction that is a front-rear direction of the pipe transport device 1, and penetrates the pipe member 50 to support the pipe member 50, the pipe member 50 having flexibility. The pipe member 50 is, for example, a SUS bellows pipe (bellows-type extensible flexible pipe). The pipe support member 11 includes a rod-shaped portion 111 and anchors 112A and 112B.

The rod-shaped portion 111 is a rod-shaped member extending in the one direction. The length of the rod-shaped portion 111 in the one direction is longer than that of the pipe member 50.

The anchors 112A and 112B are respectively located at a first end 111A and a second end 111B, which are both ends of the rod-shaped portion 111 in the one direction.

As illustrated in FIG. 1, the pipe transfer members 12A and 12B are a pair of dollies detachably supporting the pipe support member 11 and capable of transferring the supported pipe support member 11. The pipe transfer member 12A is located at the first end 111A of the rod-shaped portion 111 of the pipe support member 11. The pipe transfer member 12B is located at the second end 111B of the rod-shaped portion 111 of the pipe support member 11. That is, the pipe transfer member 12A is located at an end of the pipe transport device 1 in the forward direction FR. The pipe transfer member 12B is located at an end of the pipe transport device 1 in the rearward direction RR. The pipe transfer members 12A and 12B are coupled to each other by a coupling member 120. The pipe transfer members 12A and 12B have the same configuration except the coupling positions to the coupling member 120.

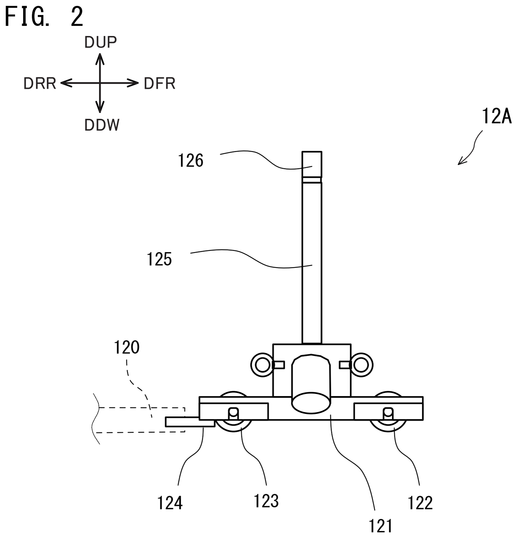

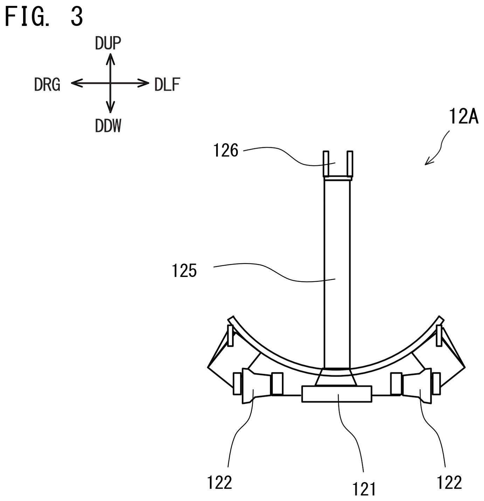

Further, with reference to FIGS. 2 and 3, a specific configuration of the pipe transfer member 12A located at the forward end of the pipe transport device 1 will be exemplarily described below. FIG. 2 is an enlarged side view illustrating a schematic configuration of the pipe transfer member 12A of the pipe transport device 1. FIG. 3 is an enlarged front view illustrating a schematic configuration of the pipe transfer member 12A of the pipe transport device 1.

As illustrated in FIGS. 2 and 3, the pipe transfer member 12A includes a vehicle body 121, a front wheel 122, a rear wheel 123, a coupling part 124, a support part 125, and a receiving part 126.

The front wheel 122 is located in a front portion of the vehicle body 121. The rear wheel 123 is located in the rearward direction DRR of the pipe transfer member 12A relative to the front wheel 122, in the front-rear direction of the pipe transfer member 12A. That is, the rear wheel 123 is located in a rear portion of the vehicle body 121. The pipe transfer member 12A is capable of traveling on a rail R laid on the ground by the front wheel 122 and the rear wheel 123.

The coupling part 124 is located in a rear portion of the vehicle body 121 in the front-rear direction of the pipe transfer member 12A and fixed to the coupling member 120 by fasteners such as bolts and nuts or the like.

The support part 125 is detachably supported on the vehicle body 121 and extends in the upward direction DUP of the pipe transfer member 12A.

The receiving part 126 is located at the upper end of the support part 125. The receiving part 126 is configured to allow the pipe support member 11 to be inserted from above the pipe transfer member 12A and fixed therein.

The pipe transfer member 12B is the same as the pipe transfer member 12A except that the coupling part 124 is located in a front portion of the vehicle body 121 in the front-rear direction of the pipe transfer member 12B.

The pipe transfer members 12A and 12B transfer the pipe member 50 supported by the pipe support member 11 along the axial direction of the existing pipeline indicated by the white arrow in FIG. 1, while supporting the pipe support member 11 in the existing pipeline.

As described above, the pipe transport device 1 is a device for transporting the pipe member 50 to be installed in the existing pipeline. The pipe transport device 1 includes: the pipe support member 11 that is a rod-shaped member and penetrates the pipe member to support the pipe member, the pipe member having flexibility; and the pipe transfer members 12A and 12B detachably supporting the pipe support member 11 and capable of transferring the supported pipe support member 11. In the existing pipeline, the pipe transfer members 12A and 12B transfer the pipe member 50 supported by the pipe support member 11 along the axial direction of the pipeline, in the state where the pipe transfer members 12A and 12B support the pipe support member 11.

In the configuration described above, the pipe transfer members 12A and 12B detachably support the pipe support member 11. Accordingly, the pipe support member 11 can be inserted into the pipe member 50 in a state where the pipe support member 11 is detached from the pipe transfer members 12A and 12B. The pipe transfer members 12A and 12B can also support the pipe support member 11 in the state where the pipe support member 11 penetrates the pipe member 50 to support the pipe member 50. In this manner, the flexible pipe member 50 is supported by the pipe support member 11 in the state where the pipe support member 11 penetrates the pipe member 50. Accordingly, the posture of the pipe member 50 during transfer can be stabilized. This can prevent contact of the pipe member 50 with the existing pipeline during transfer.

Since the pipe support member 11 penetrates the pipe member 50, after the pipe member 50 is transported to a predetermined position in the existing pipeline, the pipe support member 11 is detached from the pipe transfer members 12A and 12B, and in this state, the pipe support member 11 can be easily pulled out from the pipe member 50.

As described above, in this configuration, since the flexible pipe member 50 is supported by the pipe support member 11 in the state of being penetrated by the pipe support member 11, the posture of the pipe member 50 during transfer can be stabilized. In addition, in the above configuration, the pipe support member 11 can be easily pulled out from the pipe member 50 in the state where the pipe support member 11 is detached from the pipe transfer members 12A and 12B. Thus, high workability is obtained in pulling out the pipe support member 11 from the pipe member 50.

In the manner described above, the flexible pipe member 50 can be efficiently transferred in a stable posture in the pipeline.

### (Piping Method)

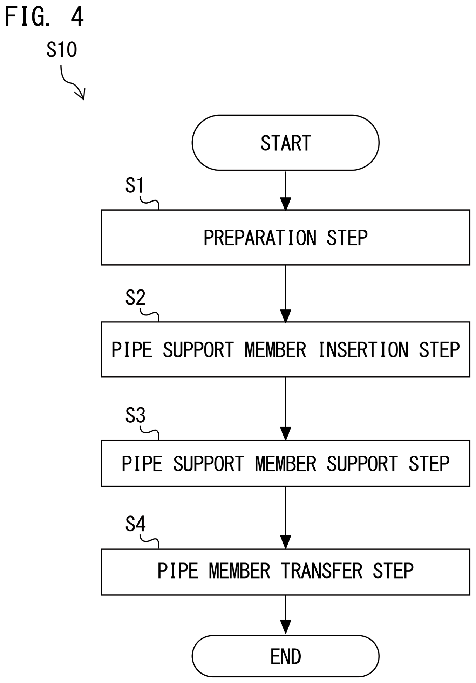

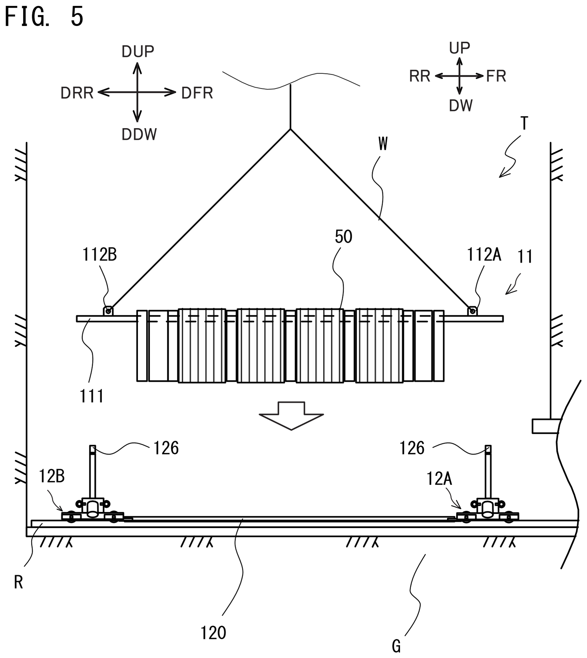

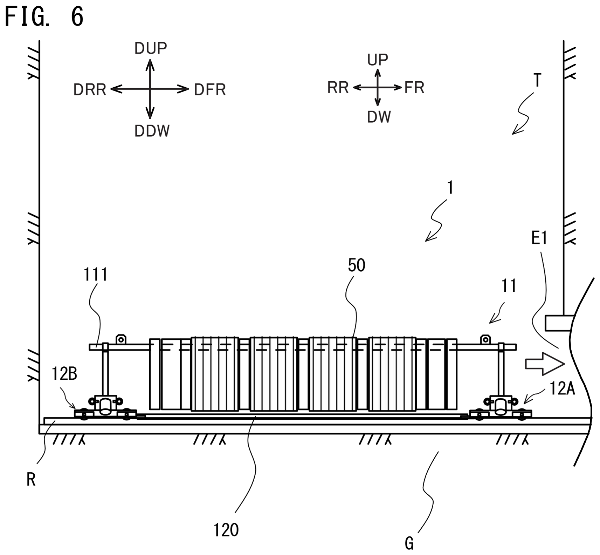

With reference to FIGS. 4 through 6, a piping method for installing a pipe member in an existing pipeline will be described. FIG. 4 is a flowchart showing process steps of a piping method S10 according to the first embodiment. FIG. 5 is a view for describing an operation of attaching the pipe member 50 suspended by a wire rope to the pipe transfer members 12A and 12B. FIG. 6 is a view for describing a state where the pipe support member 11 is supported by the pipe transfer members 12A and 12B.

As illustrated in FIG. 4, the piping method S10 includes a preparation step S1, a pipe support member insertion step S2, a pipe support member support step S3, and a pipe member transfer step S4.

First, in the preparation step S1, the pipe transfer members 12A and 12B coupled to each other by the coupling member 120 are prepared on the rail R laid on a bottom G of a shaft T.

In the next pipe support member insertion step S2, the pipe support member 11 is inserted into the flexible pipe member 50. In the pipe support member insertion step S2, as illustrated in FIG. 5, in the state where the pipe support member 11 is inserted into the pipe member 50, a wire rope W is stretched between the anchors 112A and 112B located at both ends of the rod-shaped portion 111 of the pipe support member 11. Then, a slinging operation of the wire rope W is performed on an unillustrated hook of a crane. The thus-slung pipe member 50 is lowered into the shaft T by the crane.

In the pipe support member support step S3, the pipe member 50 is further lowered in the shaft T in the downward direction as indicated by the white arrow in FIG. 5 so that the pipe transfer members 12A and 12B support the pipe support member 11 as illustrated in FIG. 6. More specifically, the pipe support member 11 is inserted into the receiving parts 126 of the pipe transfer members 12A and 12B from above the pipe transfer members 12A and 12B.

In the pipe member transfer step S4, the pipe transport device 1 is advanced into an existing pipeline from an opening E1 of the existing pipeline located at the bottom G of the shaft T. That is, in the pipe member transfer step S4, the pipe member 50 supported by the pipe support member 11 is transferred by the pipe transfer members 12A and 12B along the axial direction of the pipeline indicated by the white arrow in FIG. 6, in the existing pipeline.

As described above, the piping method S10 is a method for installing the pipe member 50 in the existing pipeline. The piping method S10 includes the pipe support member insertion step S2 of inserting the pipe support member 11 into the flexible pipe member 50, the pipe support member support step S3 of supporting the pipe support member 11 by the pipe transfer members 12A and 12B, and the pipe member transfer step S4 of transferring by the pipe transfer members 12A and 12B, in the existing pipeline, the pipe member 50 supported by the pipe support member 11 along the axial direction of the pipeline.

In the configuration described above, in the state where the pipe support member 11 penetrates the pipe member 50 to support the pipe member 50, the pipe support member 11 can be transferred by the pipe transfer members 12A and 12B. Accordingly, the posture of the pipe member 50 during transfer can be stabilized. This can prevent contact of the pipe member 50 with the existing pipeline during transfer.

Since the pipe support member 11 penetrates the pipe member 50, after the pipe member 50 is transported to a predetermined position in the existing pipeline, the pipe support member 11 is detached from the pipe transfer members 12A and 12B, and in this state, the pipe support member 11 can be easily pulled out from the pipe member 50.

In the manner described above, in the configuration described above, the flexible pipe member 50 is supported by the pipe support member 11 in the state of being penetrated by the pipe support member 11. Accordingly, the posture of the pipe member 50 during transfer can be stabilized. In addition, in the above configuration, the pipe support member 11 can be easily pulled out from the pipe member 50 in the state where the pipe support member 11 is detached from the pipe transfer members 12A and 12B. As a result, high workability is obtained.

In the manner described above, the flexible pipe member 50 can be efficiently transferred in a stable posture in the pipeline.

### [Second Embodiment]

### (Pipe Transport Device)

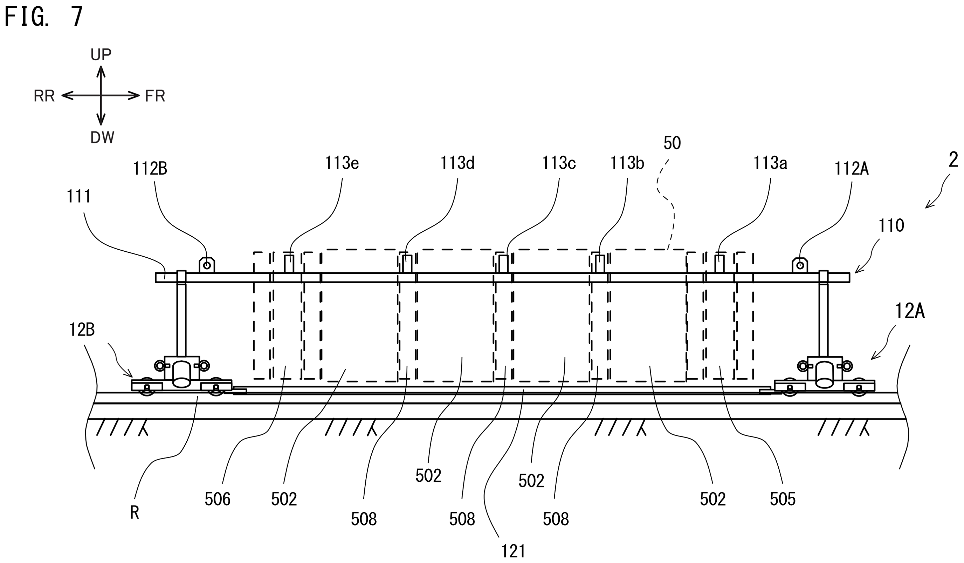

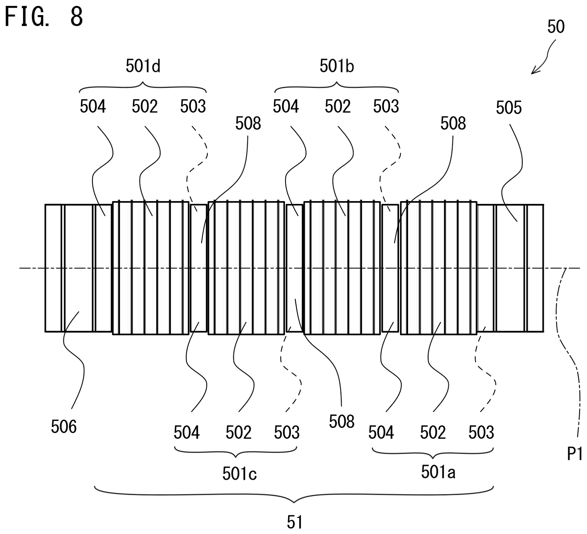

FIG. 7 is a side view illustrating a schematic configuration of a pipe transport device 2 according to a second embodiment. FIG. 8 is a side view illustrating a schematic configuration of a pipe member 50 according to the second embodiment. The pipe transport device 2 according to the second embodiment is different from the pipe transport device 1 according to the first embodiment in supporting a coupling part 508 of the pipe member 50. In the following description, components similar to those of the first embodiment are denoted by the same reference characters and will not be described again, and only components different from those of the first embodiment will be described.

As illustrated in FIG. 8, more specifically, the pipe member 50 includes a coupled body 51 constituted by a plurality of bellows pipe members 501a through 501d that are coupled in series, an end member 505 located at one end of the coupled body 51 in an axial direction P1 of the pipe member 50, and an end member 506 located at the other end.

Each of the bellows pipe members 501a through 501d includes a displacement portion 502, a joint portion 503 located at one end of the displacement portion 502 in the axial direction P1 of the pipe member 50, and a joint portion 504 located at the other end. The displacement portion 502 has a bellows structure. Accordingly, the displacement portion 502 has extensibility and flexibility.

The end member 505 is attached to the joint portion 503 of the bellows pipe member 501a located at one end of the coupled body 51. The end member 506 is attached to the joint portion 504 of the bellows pipe member 501d located at the other end of the coupled body 51.

Adjacent pipes are coupled to each other by the joint portion of one pipe and the joint portion of the other pipe. For example, the coupling part 508 is constituted by the joint portion 504 of the bellows pipe member 501a and the joint portion 503 of the bellows pipe member 501b.

In this manner, the pipe member 50 includes the plurality of displacement portions 502 and the plurality of coupling parts 508. The outer diameter of each displacement portion 502 is larger than the outer diameter of each coupling part 508.

As illustrated in FIG. 7, the pipe transport device 2 includes a pipe support member 110.

The pipe support member 110 includes a rod-shaped portion 111, a plurality of projection portions 113a through 113e, and anchors 112A and 112B.

The rod-shaped portion 111 and the anchors 112A and 112B are already described in the first embodiment, and thus, will not be described again here.

As illustrated in FIG. 7, each of the plurality of projection portions 113a through 113e projects in a direction intersecting with the one direction with respect to the rod-shaped portion 111.

In a state where the pipe support member 110 penetrates the pipe member 50 to support the pipe member 50, the plurality of projection portions 113b through 113d support the coupling parts 508 in the pipe member 50. The projection portion 113a supports the end member 505 of the pipe member 50. The projection portion 113e supports the end member 506 of the pipe member 50.

As described above, the pipe support member 110 includes the rod-shaped portion 111 extending in one direction, and the projection portions 113b through 113d each projecting in the direction intersecting with the one direction with respect to the rod-shaped portion 111 and supporting the coupling parts 508 in the pipe member 50. The pipe support member 110 also includes the projection portions 113a and 113e supporting the end members 505 and 506 in the pipe member 50.

In the configuration described above, the projection portions 113a through 113e support the coupling parts 508 of the pipe member 50 and other members. Accordingly, the pipe support member 110 can support the coupling parts 508 that are not likely to be displaced and other members by the projection portions 113b through 113d while avoiding the displacement portions 502 that are likely to be displaced in the pipe member 50. Thus, it is possible to prevent deformation of the pipe member 50 in transferring the pipe member 50 in the state where the pipe support member 110 penetrates the pipe member 50 to support the pipe member 50.

In the configuration described above, the positions of the projection portions 113a through 113e in the one direction may be adjustable relative to the rod-shaped portion 111. Accordingly, the positions of the projection portions 113a through 113e can be adjusted in accordance with the positions of the coupling parts 508 of the pipe member 50 and other members. As a result, versatility of the pipe transport device 2 can be enhanced.

### (Outline of Piping Method)

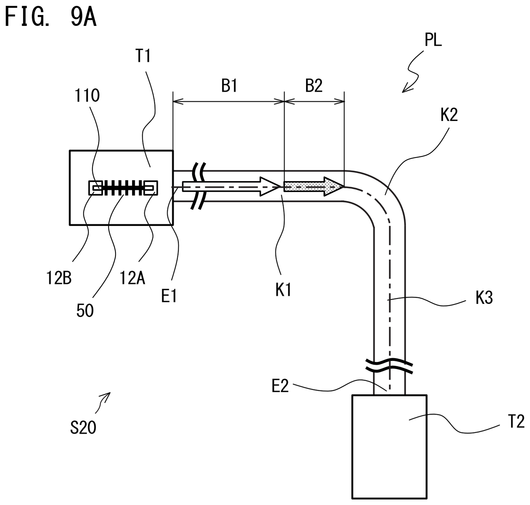

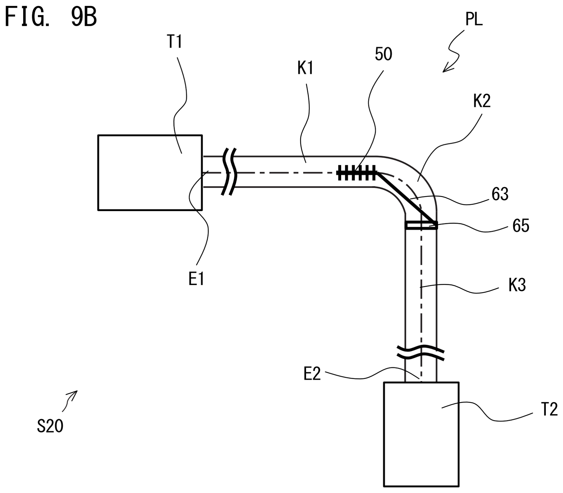

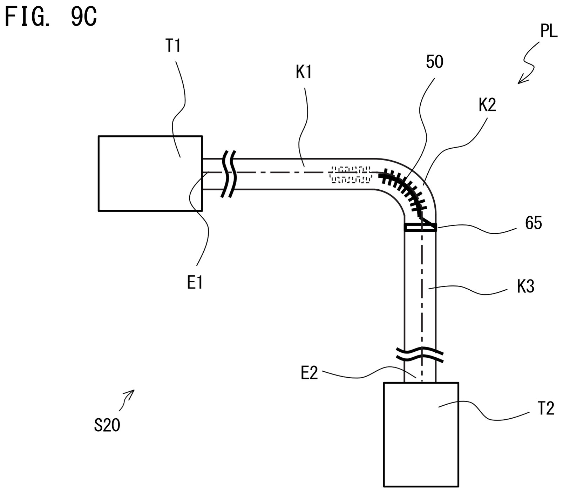

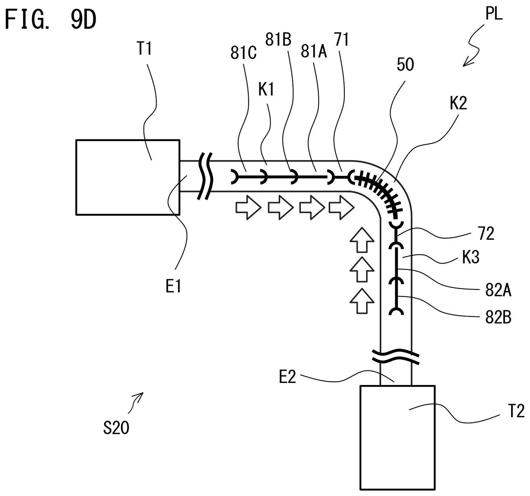

With reference to FIGS. 9A through 9D, an outline of a piping method for installing a pipe member in an existing pipeline will be described. FIG. 9A is a view schematically illustrating a pipe member transfer step of a piping method S20 according to the second embodiment. FIG. 9B is a view schematically illustrating a support ring setting step, a winding device disposing step, and a coupling step of the piping method S20 according to the second embodiment. FIG. 9C is a view schematically illustrating a pulling step of the piping method S20 according to the second embodiment. FIG. 9D is a view schematically illustrating a piping step for a coupling collar and a straight pipe of the piping method S20 according to the second embodiment.

The piping method S20 according to the second embodiment is different from the piping method S10 according to the first embodiment in disposing the pipe member 50 in a pipeline including a bent pipe portion. In the following description, components similar to those of the first embodiment are denoted by the same reference characters and will not be described again, and only components different from those of the first embodiment will be described.

As illustrated in FIG. 9A, an existing pipeline PL as a target of piping construction includes a first straight pipe portion K1, a bent pipe portion K2, and a second straight pipe portion K3. The first straight pipe portion K1 has an opening E1 connected to a shaft T1 at one end. The other end of the first straight pipe portion K1 is connected to one end of the bent pipe portion K2. The other end of the bent pipe portion K2 is connected to one end of the second straight pipe portion K3. The bent pipe portion K2 connects the first straight pipe portion K1 and the second straight pipe portion K3 to each other at an angle of 90°. The second straight pipe portion K3 has an opening E2 connected to a shaft T2 at the other end.

As illustrated in FIG. 9A, in the piping method S20, first, the pipe support member 110 supporting the pipe member 50 is supported by the pipe transfer members 12A and 12B in the shaft T1. Then, the pipe member 50 supported by the pipe support member 110 is advanced by the pipe transfer members 12A and 12B to the opening E1 of the first straight pipe portion K1 connected to the shaft T1. The pipe transfer members 12A and 12B are conveyed in the traveling direction by a self-propelled vehicle such as an unillustrated battery car coupled to the rear of the pipe transfer member 12B, for example. The pipe member 50 that has entered the first straight pipe portion K1 from the opening E1 is transferred along the axial direction of the first straight pipe portion K1 (axial direction of the pipeline) indicated by the chain line in FIG. 9A, up to the front of the bent pipe portion K2.

Subsequently, as illustrated in FIG. 9B, the pipe support member 110 is pulled out from the pipe member 50, and the pipe transfer members 12A and 12B are removed. A support ring 65 is set in the second straight pipe portion K3, and the pipe member 50 and the support ring 65 are coupled to each other by a wire 63. Here, the wire 63 is wound by a winding device or the like so that the pipe member 50 is thereby pulled toward the support ring 65.

Accordingly, as illustrated in FIG. 9C, the pipe member 50 moves to the other side of the bent pipe portion K2, while bending along a curve of the bent pipe portion K2. Thereafter, the support ring 65 and the wire 63 are removed.

Further, as illustrated in FIG. 9D, a coupling collar 71 and PN-type pipes 81A, 81B, and 81C as straight pipes are sequentially conveyed from the shaft T1 and connected to one end of the disposed pipe member 50. A coupling collar 72 and PN-type pipes 82A and 82B are sequentially conveyed from the shaft T2 and connected to the other end of the disposed pipe member 50. Accordingly, the pipe member 50, the coupling collars 71 and 72, the PN-type pipes 81A, 81B, and 81C, and the PN-type pipes 82A and 82B can be connected in the existing pipeline PL. The type of pipe connected to the pipe member 50 is an example for description, and is not limited to that in the above example. Any pipes can be connected to the pipe member 50 depending on the shape of the pipeline PL and others.

### (Details of Piping Method)

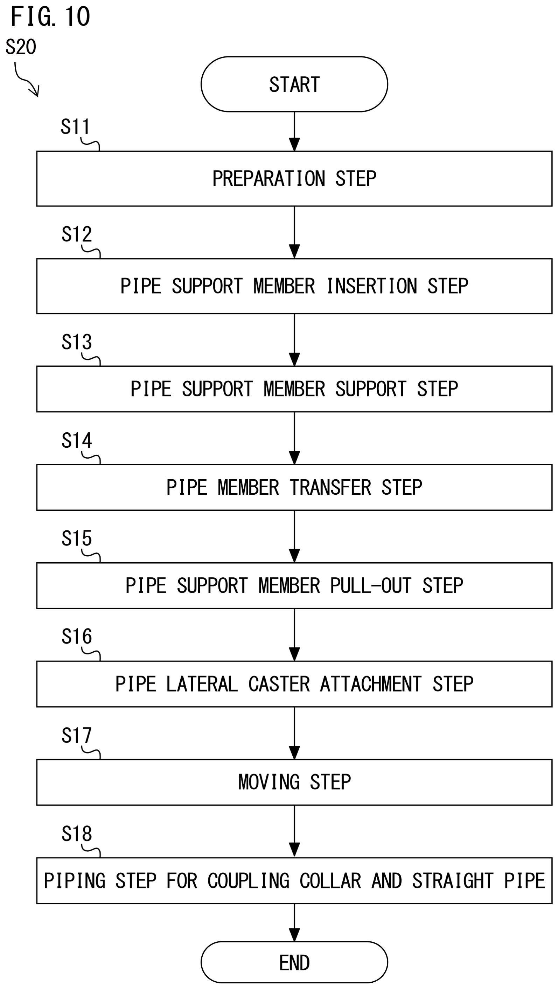

With reference to FIGS. 10 through 24, the piping method S20 will be described in detail. FIG. 10 is a flowchart showing process steps of the piping method S20 according to the second embodiment. Process steps of the piping method S20 will be described in order below.

### (Preparation Step)

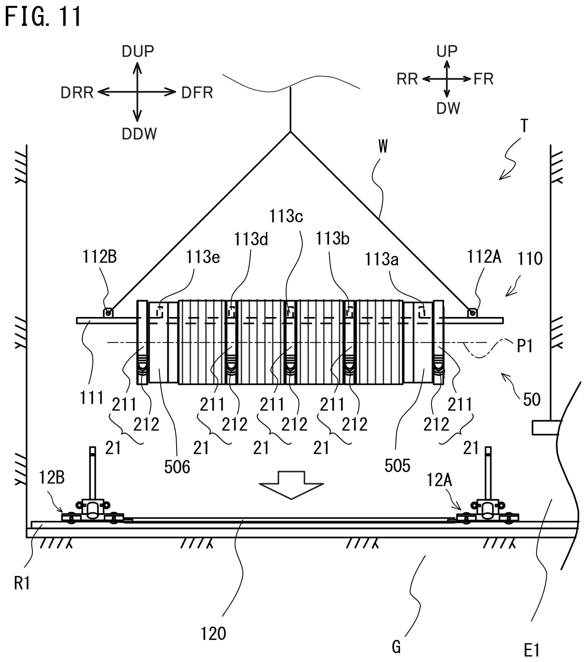

In the preparation step S11, the pipe transfer members 12A and 12B coupled to each other by the coupling member 120 are prepared on a rail R1 laid on a bottom G of the shaft T1 (see also FIG. 11).

### (Pipe Support Member Insertion Step)

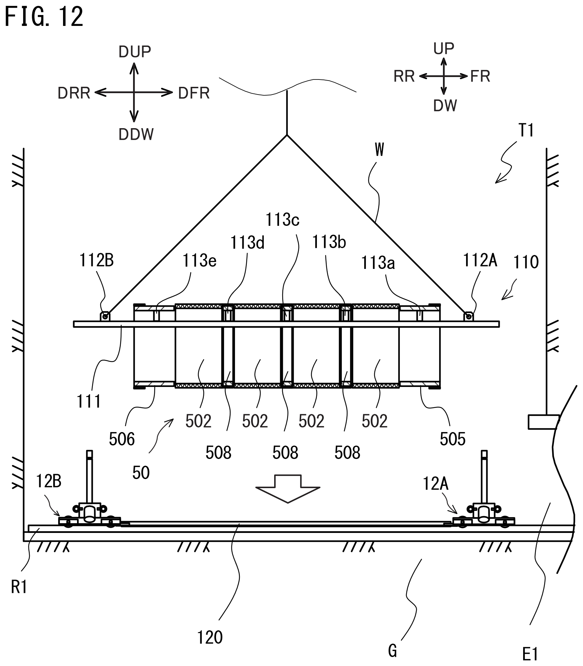

FIG. 11 is a view for describing an operation of attaching the pipe member 50 suspended by a wire rope to the pipe transfer members 12A and 12B. FIG. 12 is a view illustrating the pipe member 50 in FIG. 11 in a vertical cross section.

In the pipe support member insertion step S12, as illustrated in FIGS. 11 and 12, the pipe support member 110 is inserted into the pipe member 50 to which a caster band 21 is attached. The caster bands 21 are attached to the radially outer side of the coupling parts 508 and the end members 505 and 506. Each of the caster bands 21 includes an annular body 211 and a pair of casters 212. The center axis of the annular body 211 coincides with the axial direction P1 of the pipe member 50. The caster band 21 will be described in detail later. The pipe support member 110 is located in the pipe member 50 such that the projection portions 113b through 113d of the pipe support member 110 support the coupling parts 508 of the pipe member 50. The pipe support member 110 is located in the pipe member 50 such that the projection portions 113a and 113e of the pipe support member 110 support the end members 505 and 506 of the pipe member 50.

In addition, in the pipe support member insertion step S2, as illustrated in FIGS. 11 and 12, in the state where the pipe support member 110 is inserted into the pipe member 50, a wire rope W is stretched between the anchors 112A and 112B located at both ends of the rod-shaped portion 111 of the pipe support member 110. Then, a slinging operation of the wire rope W is performed on an unillustrated hook of a crane. The thus-slung pipe member 50 is lowered into the shaft T1 by the crane.

### (Pipe Support Member Support Step)

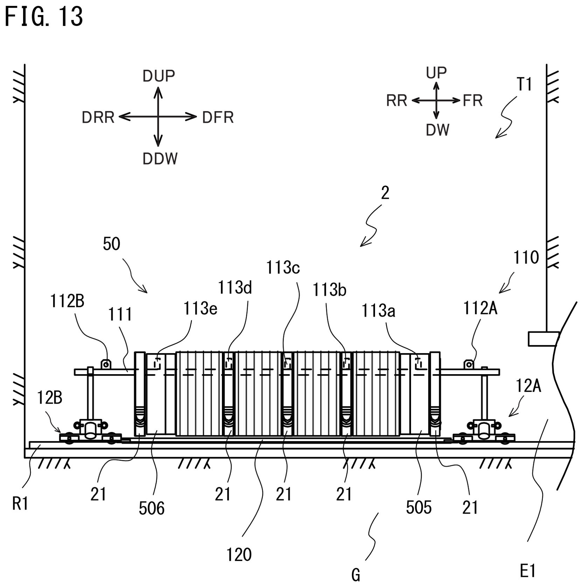

FIG. 13 is a view for describing a state where the pipe support member 110 is supported by the pipe transfer members 12A and 12B.

In the pipe support member support step S13, the pipe support member 110 is supported by the pipe transfer members 12A and 12B. The pipe transfer members 12A and 12B support the pipe support member 110 in the state where the pipe support member 110 penetrates the pipe member 50. In the state where the pipe support member 110 penetrates the pipe member 50, the projection portions 113b through 113d of the pipe support member 110 support the coupling parts 508 in the pipe member 50. In the other respects, the pipe support member support step S13 is the same as the pipe support member support step S3 described above. Therefore, the pipe support member support step S13 will not be described in detail again.

### (Pipe Member Transfer Step)

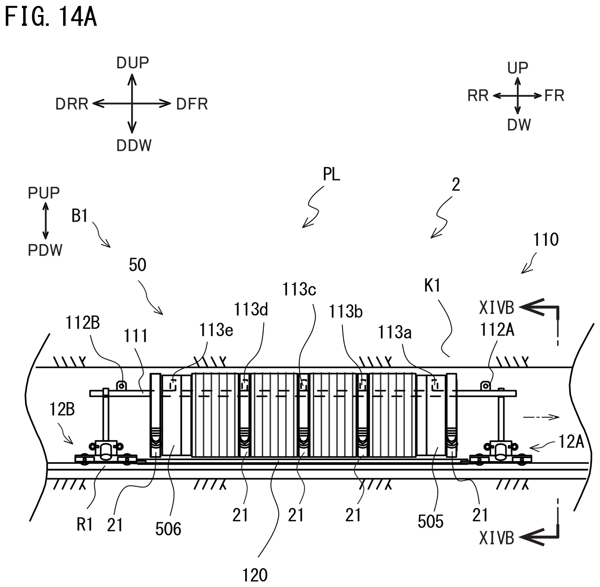

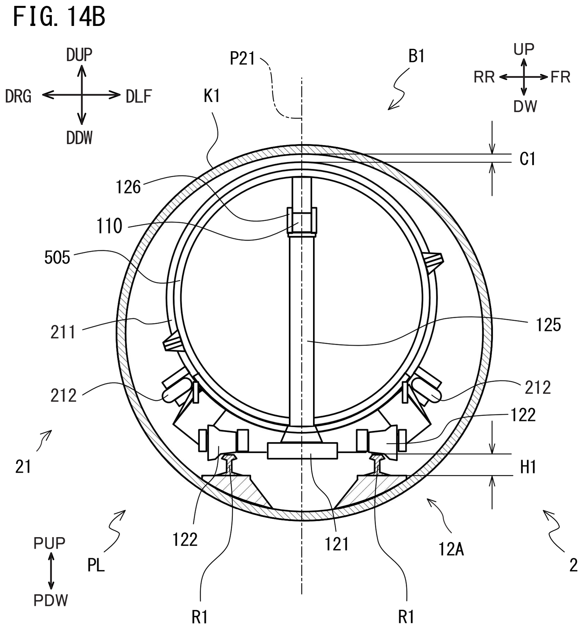

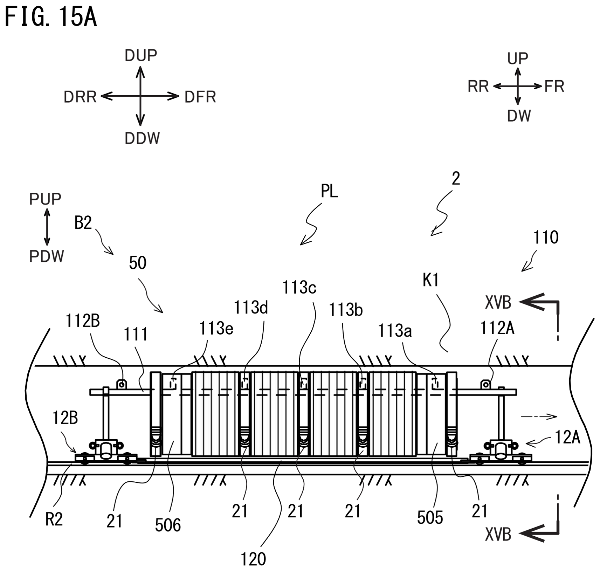

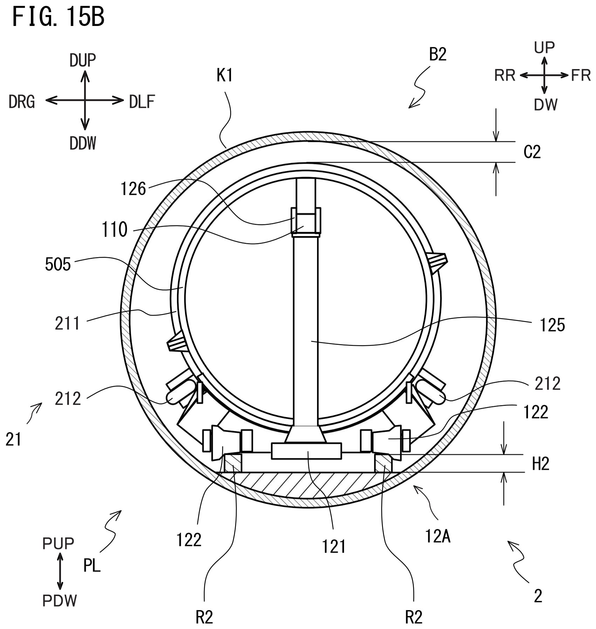

FIG. 14A is a view illustrating a part of the pipe member transfer step S14. FIG. 14B is an enlarged cross-sectional view taken along line XIVB-XIVB in FIG. 14A. FIG. 15A is a view illustrating another part of the pipe member transfer step S14. FIG. 15B is an enlarged cross-sectional view taken along line XVB-XVB in FIG. 15A.

In the pipe member transfer step S14, in the first straight pipe portion K1, the pipe member 50 supported by the pipe support member 110 is transferred by the pipe transport device 2 including the pipe transfer members 12A and 12B along the axial direction of the first straight pipe portion K1 indicated by a chain line arrow in FIG. 14A. As described above, the pipe transport device 2 moves by a self-propelled vehicle (not shown) coupled to the rear of the pipe transfer member 12B, in the front-rear direction of the pipe transport device 2. Here, with reference to FIG. 9A again, a pipe transfer section B1 and a pipe mount section B2 will be described.

As illustrated in FIGS. 9A, 14A, and 14B, a rail R1 with a height H1 is laid in the pipe transfer section B1 in the first straight pipe portion K1, starting from the shaft T1. A clearance between the inner wall of the first straight pipe portion K1 and the upper end of the pipe member 50 conveyed by the pipe transport device 2 at this time is C1.

As illustrated in FIGS. 9A, 15A, and 15B, a rail R2 with a height H2 is laid in the pipe mount section B2 located ahead of the pipe transfer section B1 in the first straight pipe portion K1. The height H2 of the rail R2 is lower than the height H1 of the rail R1. A clearance between the inner wall of the first straight pipe portion K1 and the upper end of the pipe member 50 conveyed by the pipe transport device 2 at this time is C2. The clearance C2 is larger than the clearance C1. Specifically, in the pipe mount section B2, the conveyed pipe member 50 is unloaded from the pipe transport device 2, which will be described in detail later. The length of the pipe mount section B2 is preferably greater than or equal to the entire length of the pipe transport device 2 in the front-rear direction.

As FIG. 14B, the caster band 21 is attached to the radially outer side of the end member 505. The caster band 21 includes the annular body 211 and the pair of casters 212. The annular body 211 is located on the entire outer circumferential surface of the end member 505. As illustrated in FIG. 14B, the pair of casters 212 is positioned at the lower part of the annular body 211 in the front view of the pipe transport device 2, and at the same angular position relative to a vertical axis P21 passing through the center of the annular body 211. The pair of casters 212 is located radially outward of the annular body 211.

### (Pipe Support Member Pull-out Step)

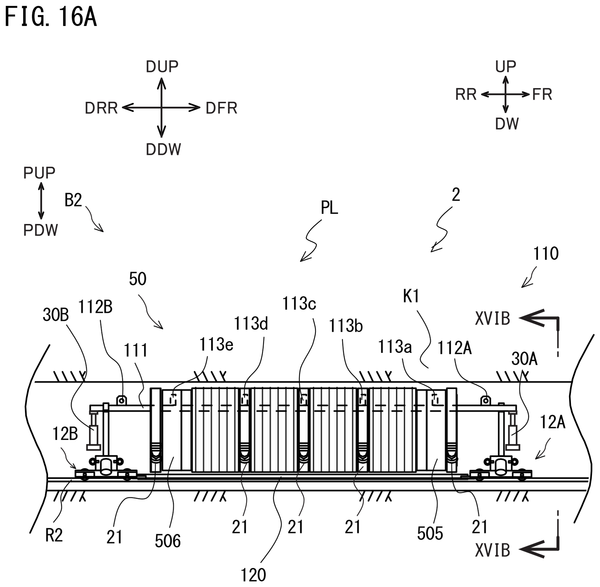

With reference to FIGS. 16A through 20B, the pipe support member pull-out step S15 will be described. In the pipe support member pull-out step S15, in a state where the pipe support member 110 is detached from the pipe transfer members 12A and 12B, the pipe support member 110 is pulled out from the pipe member 50. The pipe support member pull-out step S15 includes a setting operation of pipe lifting jigs 30A and 30B, a pipe lifting operation, a pull-out operation of the pipe transfer members 12A and 12B, a mount operation of the pipe member 50, and a pull-out operation. The steps will be specifically described below.

### (Setting Operation of Pipe Lifting Jig)

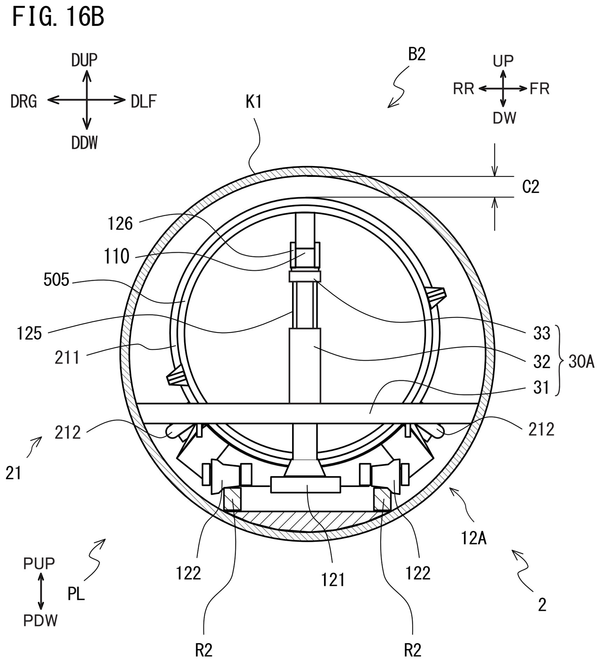

FIG. 16A is a view for describing a setting operation of the pipe lifting jigs 30A and 30B in the pipe support member pull-out step S15. FIG. 16B is an enlarged cross-sectional view taken along line XVIB-XVIB in FIG. 16A.

As illustrated in FIGS. 16A and 16B, the pipe lifting jigs 30A and 30B are set in the first straight pipe portion K1. The pipe lifting jigs 30A and 30B can be realized by, for example, hydraulic jacks. The pipe lifting jig 30A is set at the forward end of the pipe support member 110 in the front-rear direction of the pipe transport device 2. The pipe lifting jig 30B is set at the rearward end of the pipe support member 110 in the front-rear direction of the pipe transport device 2. Since the pipe lifting jigs 30A and 30B have basically the same configuration, a schematic configuration of the pipe lifting jig 30A will be described as an example.

The pipe lifting jig 30A includes a base part 31, an elevation part 32, and a receiving base 33. The base part 31 is set at both side surfaces of a lower portion of the first straight pipe portion K1. The base part 31 supports the elevation part 32. The elevation part 32 supports the receiving base 33 such that the receiving base 33 is vertically movable in the top-bottom direction of the existing pipeline PL. The receiving base 33 supports the pipe support member 110.

### (Pipe Lifting Operation)

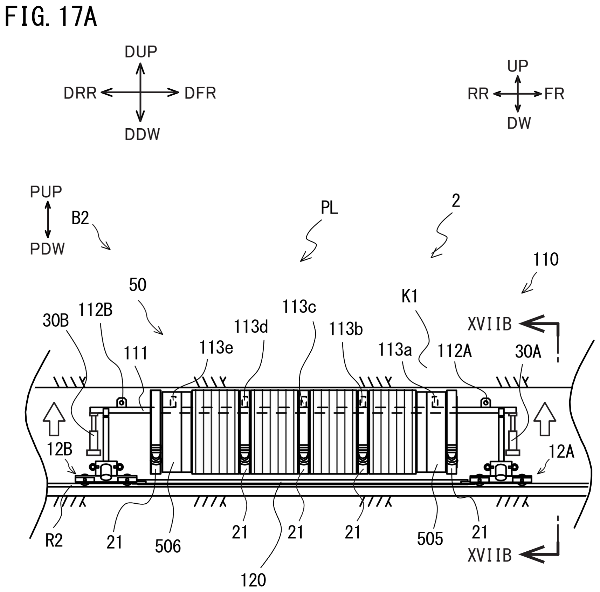

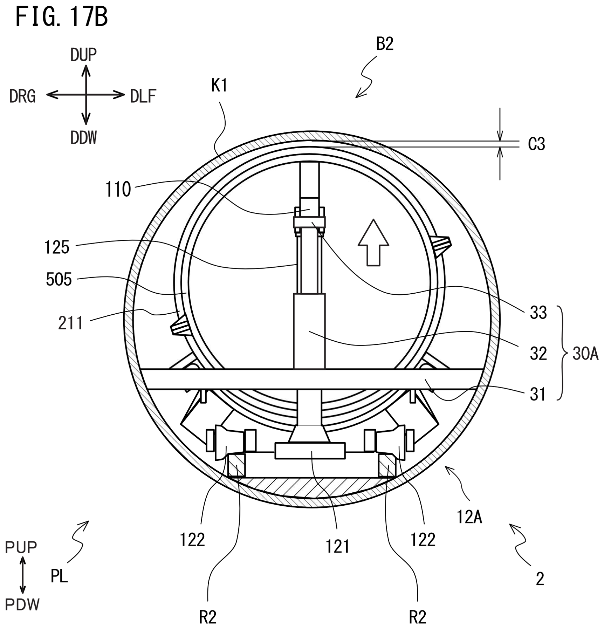

FIG. 17A is a view for describing a pipe lifting operation in the pipe support member pull-out step S15. FIG. 17B is an enlarged cross-sectional view taken along line XVIIB-XVIIB in FIG. 17A.

As illustrated in FIGS. 17A and 17B, the pipe lifting jigs 30A and 30B lift the pipe support member 110 with respect to the pipe transfer members 12A and 12B. Specifically, the elevation parts 32 of the pipe lifting jigs 30A and 30B lift the receiving base 33 supporting the pipe support member 110. Accordingly, the pipe support member 110 is separated from the pipe transfer members 12A and 12B. As indicated by the white arrow in FIG. 17B, the pipe member 50 is lifted upward in the top-bottom direction of the pipe transport device 2. A clearance between the inner wall of the first straight pipe portion K1 and the upper end of the pipe member 50 conveyed by the pipe transport device 2 at this time is C3.

In the manner described above, in the pipe mount section B2, since the rail R2 with a height lower than that of the rail R1 is laid, a clearance for lifting the pipe member 50 can be enlarged. Accordingly, even in lifting the pipe member 50, the clearance C3 can be maintained.

### (Pull-out Operation of Transfer Member)

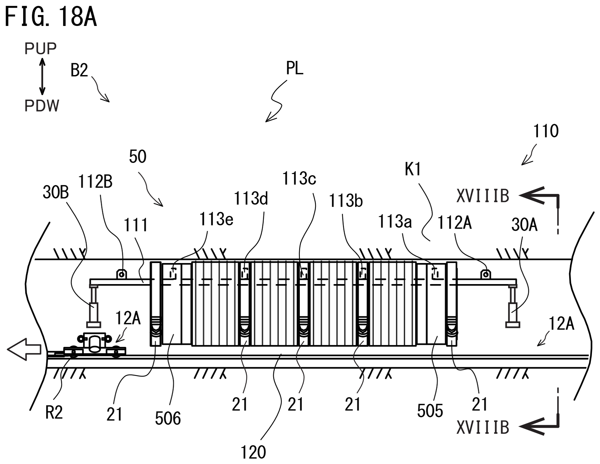

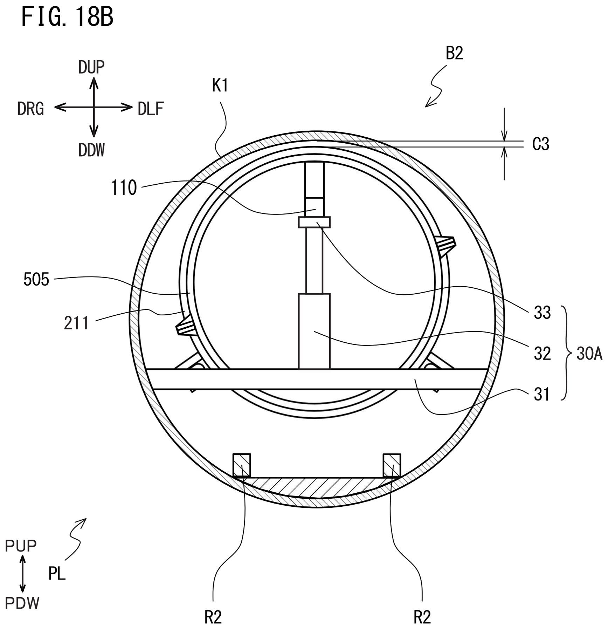

FIG. 18A is a view for describing a pull-out operation of the pipe transfer members 12A and 12B in the pipe support member pull-out step S15. FIG. 18B is an enlarged cross-sectional view taken along line XVIIIB-XVIIIB in FIG. 18A.

As illustrated in FIGS. 18A and 18B, in the state where the pipe support member 110 is separated from the pipe transfer members 12A and 12B, the pipe transfer members 12A and 12B are retracted relative to the pipe member 50. Specifically, the support parts 125 are detached from the pipe transfer members 12A and 12B and removed. Subsequently, an unillustrated self-propelled vehicle is retracted so that the pipe transfer members 12A and 12B are thereby moved in the direction to the shaft T1 indicated by the white arrow in FIG. 18A.

In the configuration described above, the retracted pipe transfer members 12A and 12B can be collected. Thus, the collected pipe transfer members 12A and 12B can be reused.

### (Mount Operation of Pipe Member)

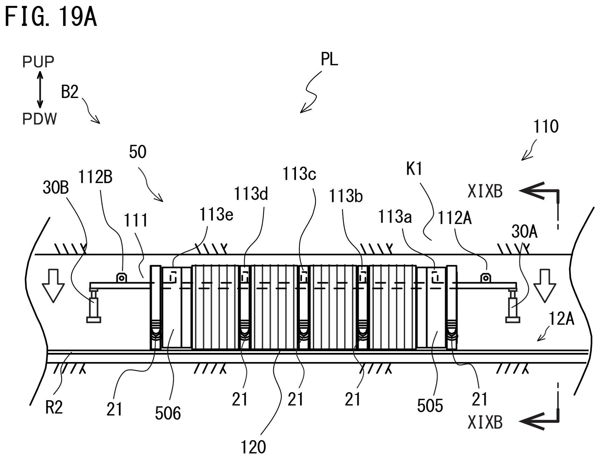

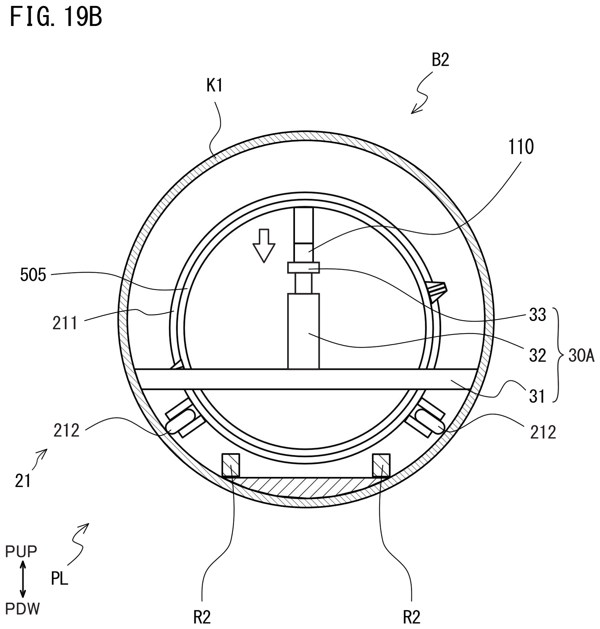

FIG. 19A is a view for describing a mount operation of the pipe member 50 in the pipe support member pull-out step S15. FIG. 19B is an enlarged cross-sectional view taken along line XIXB-XIXB in FIG. 19A.

As illustrated in FIGS. 19A and 19B, the pipe lifting jigs 30A and 30B lower the receiving bases 33 supporting the pipe support member 110. Specifically, the elevation parts 32 of the pipe lifting jigs 30A and 30B lower the receiving bases 33 supporting the pipe support member 110. Accordingly, the pipe member 50 moves downward in the existing pipeline PL indicated by the white arrow in FIG. 19B. As illustrated in FIG. 19B, the elevation parts 32 of the pipe lifting jigs 30A and 30B lower the pipe member 50 until the casters 212 of the caster bands 21 contact a lower portion of the inner wall of the first straight pipe portion K1.

### (Pull-out Operation)

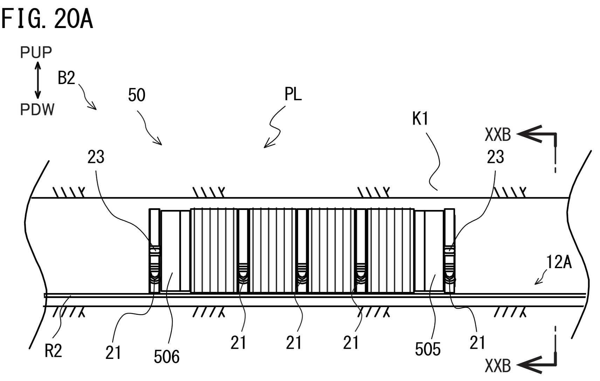

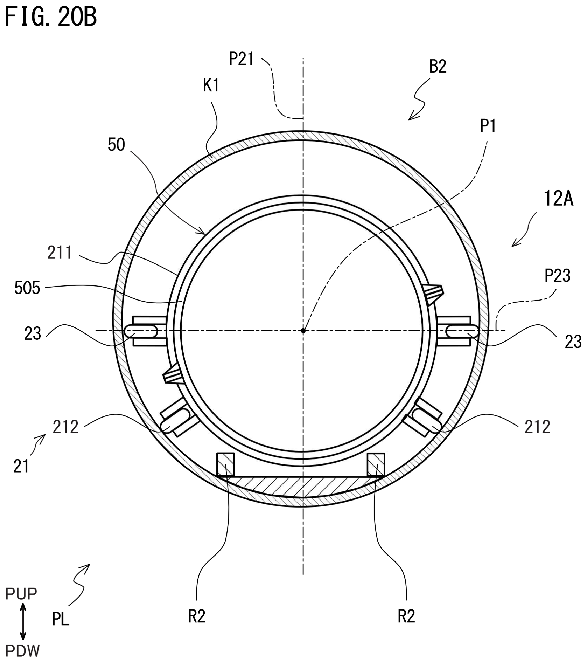

FIG. 20A is a view for describing a pull-out operation in the pipe support member pull-out step S15. FIG. 20B is an enlarged cross-sectional view taken along line XXB-XXB in FIG. 20A.

As illustrated in FIGS. 20A and 20B, in the state where the pipe member 50 is installed in the existing pipeline PL as described above, the pipe support member 110 is pulled out from the pipe member 50 and the pipe lifting jigs 30A and 30B are removed.

In the configuration described above, while the pipe support member 110 is lifted relative to the pipe transfer members 12A and 12B by using the pipe lifting jigs 30A and 30B, the pull-out work of the pipe support member 110 can be performed. After the pipe support member 110 is pulled out from the pipe member 50, the pipe member 50 can be lowered by the pipe lifting jigs 30A and 30B. In this manner, the pipe lifting jigs 30A and 30B can be used to efficiently perform the pull-out work of the pipe support member 110 and the disposing work of the pipe member 50. Accordingly, the pull-out work of the pipe support member 110 can be more efficiently performed.

### (Pipe Lateral Caster Attachment Step)

With reference to FIGS. 20A and 20B, a pipe lateral caster attachment step (caster member attachment step) S16 will be described. In the pipe lateral caster attachment step S16, as illustrated in FIGS. 20A and 20B, pipe lateral casters (caster members) 23 capable of moving the pipe member 50 in the existing pipeline PL are attached to the outer surface of the pipe member 50. Specifically, the pair of pipe lateral casters 23 is attached to the caster band 21 attached to the end member 505. As illustrated in FIG. 20B, the pair of pipe lateral casters 23 is located in the direction in which a lateral axis P23 of the annular body 211 extends. The lateral axis P23 of the annular body 211 is orthogonal to the vertical axis P21 passing through the center of the annular body 211 in the front view of the pipe transport device 2 and the axial direction P1 of the pipe member 50 (i.e., the center axis of the annular body 211). The pair of pipe lateral casters 23 is located radially outward of the annular body 211.

In the configuration described above, by attaching the pipe lateral casters 23 to the outer surface of the pipe member 50, the pipe member 50 can be easily moved in the existing pipeline PL. Thus, in a moving step below, a force of pushing the pipe member 50 into the bent pipe portion K2 can be reduced.

### (Moving Step)

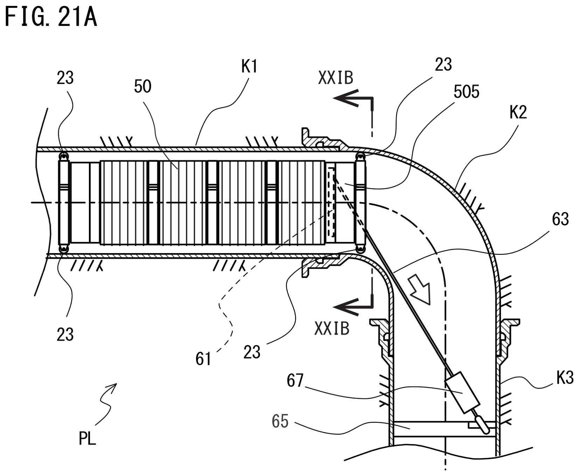

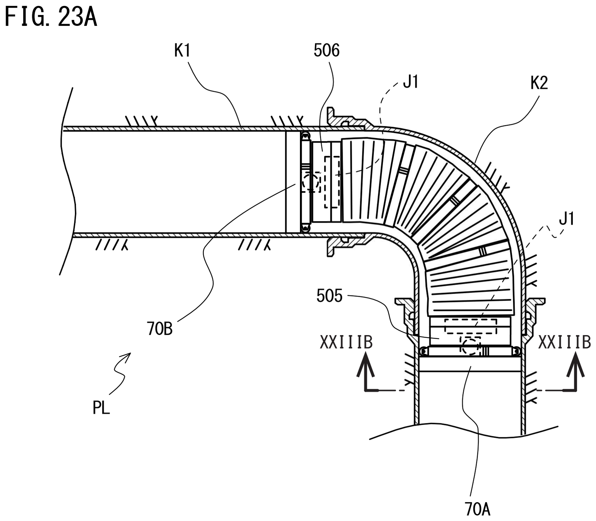

With reference to FIGS. 21A through 23C, a moving step S17 will be described.

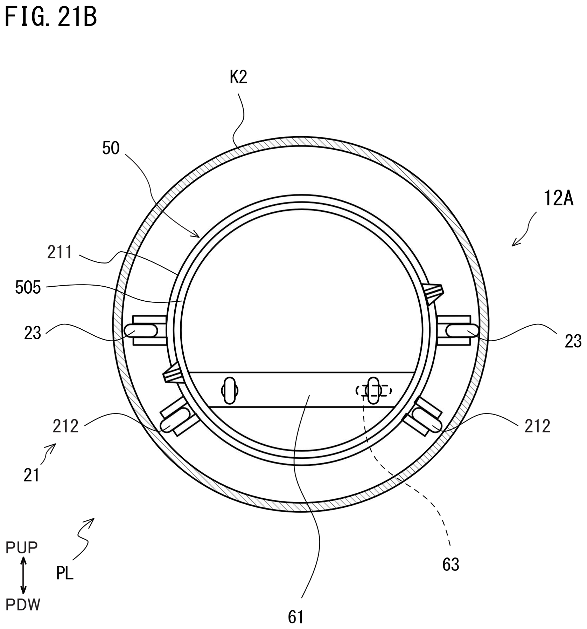

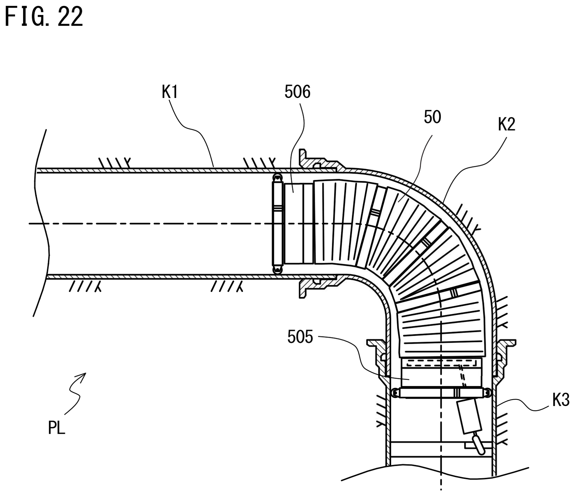

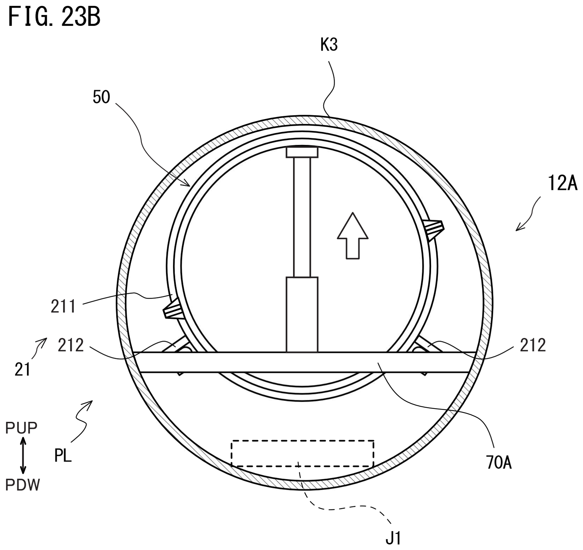

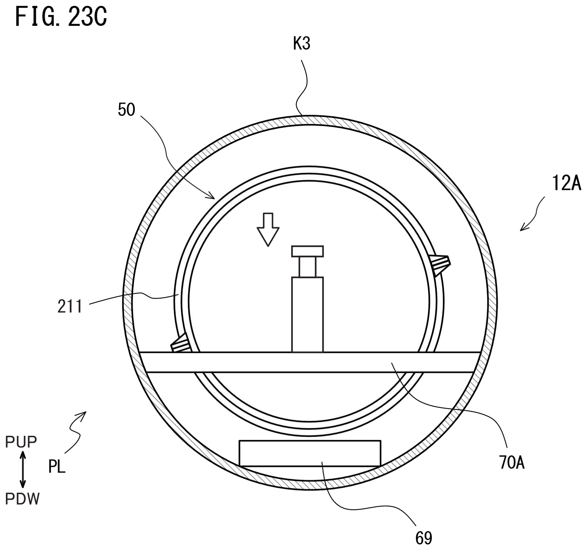

FIG. 21A is a piping diagram for describing the moving step S17. FIG. 21B is an enlarged cross-sectional view taken along line XXIB-XXIB in FIG. 20A. FIG. 22 is a piping diagram illustrating a state after pulling of the pipe member. FIG. 23A is a piping diagram illustrating a state at setting of lifting jigs. FIG. 23B is an enlarged cross-sectional view taken along line XXIIIB-XXIIIB in FIG. 23A. FIG. 23C is a view corresponding to FIG. 23B and illustrating a state at setting of a crosstie.

In the moving step S17, the pipe member 50 is pulled from the second straight pipe portion K3 so that the pipe member 50 is moved to the other end of the bent pipe portion K2 while bending along the curve of the bent pipe portion K2. Specifically, the moving step S17 includes the following work. A support ring 65 is set in the second straight pipe portion K3 (support ring setting step). As the support ring 65, a technique described in Patent Document: Japanese Patent Application Publication No. 2021-092291, for example, can be employed. The technique described in Japanese Patent Application Publication No. 2021-092291 can be employed. Subsequently, a winding device 67 such as a lever hoist or a winch is disposed on the support ring 65 (winding device disposing step). A reaction plate 61 is attached to the inside of the end member 505 of the pipe member 50, and the reaction plate 61 of the pipe member 50 is coupled to the winding device 67 by a wire 63 (coupling step).

Thereafter, the wire 63 is wound by the winding device 67, thereby pulling the pipe member 50 toward the support ring 65 as indicated by the white arrow in FIG. 21A. Accordingly, the pipe member 50 moves along the axial direction of the existing pipeline PL indicated by the chain line in FIG. 21A. As a result, as illustrated in FIG. 22, the pipe member 50 moves to the other end of the bent pipe portion K2. That is, the end member 505 of the pipe member 50 reaches the other end of the bent pipe portion K2. The use of the reaction plate 61 and the support ring 65 can obtain a reaction force in the pipeline PL. This eliminates the necessity for supplying a force of pulling the pipe member 50 from the outside of the shaft.

After the pull-in work of the pipe member 50 is completed as described above, the reaction plate 61, the wire 63, the support ring 65, and the winding device 67 are removed. The pipe lateral casters 23 are removed from the caster band 21.

Further, as described below, mount work of the pipe member 50 is performed. First, as illustrated in FIGS. 23A and 23B, a pipe lifting jig 70A is set in the second straight pipe portion K3, whereas a pipe lifting jig 70B is set in the first straight pipe portion K1. That is, the pipe lifting jig 70A is set at the end member 505 located at one end of the pipe member 50, and the pipe lifting jig 70B is set at the end member 506 located at the other end of the pipe member 50. Since the pipe lifting jigs 70A and 70B have basically similar configurations, the pipe lifting jig 70A will be described here as an example.

Thereafter, the pipe lifting jigs 70A and 70B lift the pipe member 50 upward as indicated by the white arrow in FIG. 23B. FIG. 23B illustrates a lifting state where the pipe member 50 is lifted by the pipe lifting jig 70A. In this state, the pair of casters 212 is detached from the annular body 211 of the caster band 21. A steel crosstie 69 is set at a steel crosstie set position J1. The pipe member 50 lifted by the pipe lifting jigs 70A and 70B is lowered downward as indicated by the white arrow in FIG. 23C so that the pipe member 50 is thereby set above the steel crosstie 69.

In the manner described above, the mount work of the pipe member 50 is completed.

### (Piping Step for Coupling Collar and Straight Pipe)

In a piping step for a coupling collar and a straight pipe S18, a coupling collar and a straight pipe are arranged, as described with reference to FIG. 9D.

As described above, the piping method S20 includes the pipe support member pull-out step S15 and the moving step S17 after the pipe member transfer step S14. In the pipe support member pull-out step S15, in the state where the pipe support member 110 is detached from the pipe transfer members 12A and 12B, the pipe support member 110 is pulled out from the pipe member 50. The pipeline PL includes the first straight pipe portion K1 having an opening at one end, the bent pipe portion K2 having one end connected to the other end of the first straight pipe portion K1, and the second straight pipe portion K3 having one end connected to the other end of the bent pipe portion K2. In the moving step S17, the pipe member 50 is pulled from the second straight pipe portion K3 of the pipeline PL so that the pipe member 50 thereby moves to the other end of the bent pipe portion K2 while bending along a curve of the bent pipe portion K2.

In the configuration described above, in the case of the pipeline PL including the bent pipe portion K2, the pipe member 50 is pulled from the second straight pipe portion K3 of the pipeline PL so that the pipe member 50 moves to the other end of the bent pipe portion while bending along the curve of the bent pipe portion.

With the configuration described above, the flexible pipe member can be bent and piped in the bent pipe portion. Thus, the pipe member can be disposed not only in the straight pipe portion, but also in the bent pipe portion in a bent state, and the piping method capable of piping the pipe member in various existing pipelines can be achieved. In addition, a pipeline including the bent pipe portion K2, which has been difficult to renew unless a shaft is constructed, can be easily renewed. That is, in the configuration described above, construction can be performed even on the bent pipe portion K2 where a shaft cannot be constructed due to conditions such as traffic conditions.

### [Other Embodiments]

The embodiments of the present teaching have been described above, but the embodiments are merely examples for carrying out the present teaching. Thus, the teaching is not limited to the embodiments, and the embodiments may be modified as necessary within a range not departing from the gist of the teaching.

In the embodiments described above, the pipe transfer members 12A and 12B of the pipe transport device 1, 2 are dollies each including the front wheel 122 and the rear wheel 123 for traveling on the rail. Alternatively, the pipe transfer member may have a moving mechanism such as a sled, instead of the wheel. The pipe transfer member may have a moving mechanism such as a rubber-tired wheel capable of traveling without a rail. The pipe transfer member may have a moving mechanism capable of traveling on the floor laid in the pipeline or on the bottom of the inner wall of the pipeline. The pipe transfer member may be self-propelled.

In the embodiments described above, the pipe support member 11, 110 is a rod-shaped member. Alternatively, the pipe support member may have another shape. For example, the pipe support member may have a plate shape or a frame shape, or may be a wire-like member.

The embodiments employ a so-called pipe-in-pipe technique. Alternatively, the present teaching is applicable to other techniques. The present teaching is also applicable to a shield method, for example.

In the second embodiment, the bent pipe portion K2 connects the first straight pipe portion K1 and the second straight pipe portion K3 to each other at an angle of 90°. Alternatively, the connection angle by the bent pipe portion may be larger than or smaller than 90°. In general, a curve having a connection angle exceeding 22.5° is defined as a sharp curve. The present teaching is also suitably applicable to such a sharp curve. Further, as the pipe diameter increases, a larger pull-in force or a larger insertion force is needed. The present teaching can reduce an insertion force in the bent pipe portion. Thus, the present teaching is applicable to the case of using a so-called large diameter pipe for renewing an existing pipeline.

In the second embodiment, the pipe member 50 is pulled using the support ring 65 set in the second straight pipe portion K3 as a reaction force. Alternatively, a technique for obtaining a reaction force without using a support ring can be employed. For example, a reaction force may be obtained by fixing a plate for a reaction force to an inner wall of an existing pipeline by welding or the like. Alternatively, a reaction force may be obtained by fixing the plate for a reaction force to the inner wall of the existing pipeline with insertion of the plate for a reaction force into a gap between joints of joint portions of existing pipes.

In the second embodiment, the displacement portion 502 of the pipe member 50 has a bellows structure. Alternatively, the displacement portion of the pipe member may be displaceable by a structure other than the bellows structure. For example, the displacement portion of the pipe member may have a ball joint structure.

In the second embodiment, the rail R1 with the height H1 is laid in the pipe transfer section B1 of the first straight pipe portion K1, whereas the rail R2 with the height H2 is laid in the pipe mount section B2. Alternatively, rails with different heights may not be laid in the first straight pipe portion.

In the second embodiment, the pair of casters 212 is located at specific positions relative to the annular body 211 of the caster band 21. Alternatively, the positions of the casters can be changed as appropriate. The number of casters is not limited to a pair with respect to the caster band, and may be one, or two or more, with respect to the caster band.

In the second embodiment, a specific number of caster bands 21 are attached to the pipe member 50. Alternatively, any number of caster bands may be attached to the pipe member.

In the second embodiment, the pipe lateral caster attachment step S16 that is a caster member attachment step is performed next to the pipe support member pull-out step S15. Alternatively, it is sufficient to perform the caster member attachment step before the moving step. The pipe lateral caster may be attached to the caster band beforehand as long as a sufficient clearance between the inner wall of the existing pipeline and the upper end of the pipe member is maintained.

In the second embodiment, in the pull-out operation of the transfer members, the pipe transfer members 12A and 12B are retracted relative to the pipe member 50. Alternatively, in the pull-out operation of the transfer members, the pipe transfer members 12A and 12B may not be retracted relative to the pipe member 50.

In the second embodiment, after the pull-in work of the pipe member 50 is completed and before the pipe lifting jig 70A is set in the second straight pipe portion K3, the pipe lateral casters 23 are detached from the caster band 21. Alternatively, as long as a sufficient clearance is maintained between the inner wall of the existing pipeline and the upper end of the pipe member, both the pair of casters 212 and the pipe lateral casters may be detached from the annular body 211 of the caster band 21 in the state where the pipe member is lifted by the pipe lifting jigs.

### INDUSTRIAL APPLICABILITY

The present teaching is applicable to a pipe transport device for transporting a pipe member to be installed in an existing pipeline, and a piping method for installing the pipe member in the existing pipeline.

### REFERENCE SIGNS LIST

1, 2 pipe transport device
11, 110 pipe support member
111 rod-shaped portion
112A, 112B anchor
113a through 113e projection portion
120 coupling member
121 vehicle body
122, 123 wheel
124 coupling part
125 support part
126 receiving part
12A, 12B pipe transfer member
21 caster band
211 annular body
212 caster
23 pipe lateral caster
30A, 30B, 70A, 70B pipe lifting jig
31 base part
32 elevation part
33 receiving base
50 pipe member
502 displacement portion
503 joint portion
504 joint portion
505, 506 end member
508 coupling part
51 coupled body
61 reaction plate
63 wire
65 support ring
67 device
69 steel crosstie
71 coupling collar
72 coupling collar
81A through 81C, 82A, 82B PN-type pipe
E1, E2 opening
K1 first straight pipe portion
K2 bent pipe portion
K3 second straight pipe portion
PL pipeline
R, R1, R2 rail
T, T1, T2 shaft

## Claims

1. A pipe transport device that transports a pipe member to be installed in an existing pipeline, the pipe transport device comprising:
a pipe support member that is a rod-shaped member and penetrates the pipe member to support the pipe member, the pipe member having flexibility; and
a pipe transfer member detachably supporting the pipe support member and capable of transferring the supported pipe support member, wherein
the pipe transfer member transfers the pipe member supported by the pipe support member along an axial direction of the pipeline in the existing pipeline, in a state where the pipe transfer member supports the pipe support member.

2. The pipe transport device according to claim 1, wherein
the pipe support member includes
a rod-shaped portion extending in one direction, and
a projection portion that projects a direction intersecting with the one direction with respect to the rod-shaped portion, and supports a coupling part of the pipe member, the pipe member including a plurality of displacement portions and the coupling part coupling the displacement portions to each other.

3. The pipe transport device according to claim 2, wherein
a position of the projection portion in the one direction is adjustable relative to the rod-shaped portion.

4. A piping method for installing a pipe member in an existing pipeline, the method comprising:
a pipe support member insertion step of inserting a pipe support member into the pipe member having flexibility;
a pipe support member support step of supporting the pipe support member with a pipe transfer member; and
a pipe member transfer step of transferring by the pipe transfer member, in the existing pipeline, the pipe member supported by the pipe support member along an axial direction of the pipeline.

5. The piping method according to claim 4, further comprising:
after the pipe member transfer step, in a state where the pipe support member is detached from the pipe transfer member,
a pipe support member pull-out step of pulling out the pipe support member from the pipe member; and
a pipeline including a first straight pipe portion having an opening at one end, a bent pipe portion having one end connected to another end of the first straight pipe portion, and a second straight pipe portion having one end connected to another end of the bent pipe portion,
a moving step of pulling the pipe member from the second straight pipe portion of the pipeline to move the pipe member to the another end of the bent pipe portion while bending the pipe member along a curve of the bent pipe portion.

6. The piping method according to claim 5, wherein
the moving step includes
a support ring setting step of setting a support ring in the second straight pipe portion,
a winding device disposing step of disposing a winding device in the support ring,
a coupling step of coupling the pipe member and the winding device to each other by a wire, and
a pulling step of pulling the pipe member toward the support ring by winding the wire by the winding device.

7. The piping method according to claim 5 or 6, wherein
in the pipe support member pull-out step, a pipe lifting jig is set in the first straight pipe portion and lifts the pipe support member relative to the pipe transfer member so that the pipe support member is separated from the pipe transfer member and the pipe support member is pulled out from the pipe member.

8. The piping method according to claim 7, wherein
in the pipe support member pull-out step, in the state where the pipe support member is separated from the pipe transfer member, the pipe transfer member is retracted relative to the pipe member.

9. The piping method according to claim 8, further comprising
a caster member attachment step of attaching, to an outer surface of the pipe member, a caster member capable of moving the pipe member in the existing pipeline, before the moving step.
